# EUROPEAN PATENT APPLICATION

(11) **EP 4 383 607 A1**
(43) Date of publication of application: **12.06.2024**
(21) Application number: 22852000.3
(22) Date of filing: 27.07.2022
(51) Int. Cl.: H04L 1/18, H04L 5/00

(54) **FEEDBACK METHOD, RELATED DEVICE AND READABLE STORAGE MEDIUM**

(30) Priority: 02.08.2021 CN 202110882941
(71) Applicant: Vivo Mobile Communication Co., Ltd., Dongguan, Guangdong 523863 (CN)
(72) Inventor: ZENG, Chaojun, Dongguan, Guangdong 523863 (CN)
(74) Representative: Conti, Marco
(86) International application number: PCT/CN2022/108267
(87) International publication number: WO 2023/011286

(57) **Abstract**

This application belongs to the field of communications technologies, and discloses a feedback method, a related device, and a readable storage medium. The feedback method includes: when a first physical uplink control channel PUCCH cell group corresponding to a terminal includes at least two PUCCH cells that can be used to transmit hybrid automatic repeat request acknowledgement HARQ-ACK, and the PUCCH cells corresponding to the terminal perform semi-static switching based on a time domain pattern, performing, by the terminal, a first operation on first HARQ-ACK, where the first HARQ-ACK is HARQ-ACK for semi-persistent scheduling SPS; performing, by the terminal, a first processing operation on the first HARQ-ACK based on the first operation, where the first processing operation includes one of the following: sending the first HARQ-ACK; or executing first behavior related to the first HARQ-ACK; and the first operation includes at least one of the following: determining a target PUCCH cell corresponding to the first HARQ-ACK; or determining a target PUCCH resource corresponding to the target PUCCH cell.

## Description

### CROSS-REFERENCE TO RELATED APPLICATIONS

This application claims priority to Chinese Patent Application No. 202110882941.2, filed on August 2, 2021 in China, which is incorporated herein by reference in its entirety.

### TECHNICAL FIELD

This application belongs to the field of communications technologies, and specifically, to a feedback method, a related device, and a readable storage medium.

### BACKGROUND

In ultra-reliable and low-latency communications (Ultra-Reliable and Low Latency Communications, URLLC), to shorten a feedback delay of hybrid automatic repeat request acknowledgement (Hybrid Automatic Repeat Request Acknowledgement, HARQ-ACK) as much as possible, physical uplink control channel (Physical Uplink Control Channel, PUCCH) carrier switching (carrier switching) is proposed, that is, a carrier for PUCCH transmission may be switched.

Regarding PUCCH carrier switching, for HARQ-ACK for dynamic scheduling , a feedback related parameter may be dynamically adjusted based on an indication in downlink control information (Downlink Control Information, DCI), thereby implementing switching of a PUCCH cell to shorten the feedback delay of the HARQ-ACK. However, for HARQ-ACK for semi-persistent scheduling (Semi-Persistent Scheduling, SPS), because no DCI corresponds to the HARQ-ACK for semi-persistent scheduling, and a feedback related parameter is usually determined semi-statically, a solution corresponding to the HARQ-ACK for dynamic scheduling cannot be followed. Currently, there is no related solution to feeding back HARQ-ACK for SPS.

### SUMMARY

Embodiments of this application provide a feedback method, a related device, and a readable storage medium, to resolve a feedback problem of HARQ-ACK for SPS.

According to a first aspect, a feedback method is provided. The method is performed by a terminal and includes:
when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, performing, by the terminal, a first operation on first HARQ-ACK, where the first HARQ-ACK is HARQ-ACK for semi-persistent scheduling SPS; and
performing, by the terminal, a first processing operation on the first HARQ-ACK based on the first operation, where the first processing operation includes one of the following: sending the first HARQ-ACK; or executing first behavior related to the first HARQ-ACK; and
   the first operation includes at least one of the following:
   determining a target PUCCH cell corresponding to the first HARQ-ACK; or
   determining a target PUCCH resource corresponding to the target PUCCH cell.

According to a second aspect, a feedback method is provided. The method is performed by a network side device and includes:
when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, performing, by the network side device, a first operation on first HARQ-ACK, where the first HARQ-ACK is HARQ-ACK for semi-persistent scheduling SPS; and
performing, by the network side device, a second processing operation on the first HARQ-ACK based on the first operation, where the first processing operation includes one of the following: receiving the first HARQ-ACK; or executing second behavior related to the first HARQ-ACK, where
the first operation includes at least one of the following:
   determining a target PUCCH cell corresponding to the first HARQ-ACK; or
   determining a target PUCCH resource corresponding to the target PUCCH cell.

According to a third aspect, a feedback apparatus is provided. The feedback apparatus includes:
a first execution module, configured to: when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
a sending module, configured to: perform a first processing operation on the first HARQ-ACK based on the first operation, where the first processing operation includes one of the following: sending the first HARQ-ACK; or executing first behavior related to the first HARQ-ACK; and
the first operation includes at least one of the following:
   determining a target PUCCH cell corresponding to the first HARQ-ACK; or
   determining a target PUCCH resource corresponding to the target PUCCH cell.

According to a fourth aspect, a feedback apparatus is provided. The feedback apparatus includes:
a second execution module, configured to: when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
a receiving module, configured to perform a second processing operation on the first HARQ-ACK based on the first operation, where the first processing operation includes one of the following: receiving the first HARQ-ACK; or executing second behavior related to the first HARQ-ACK, where
the first operation includes at least one of the following:
   determining a target PUCCH cell corresponding to the first HARQ-ACK; or
   determining a target PUCCH resource corresponding to the target PUCCH cell.

According to a fifth aspect, a terminal is provided. The terminal includes a processor, a memory, and a program or instructions stored in the memory and capable of running on the processor, where when the program or the instructions are executed by the processor, the steps of the method according to the first aspect are implemented.

According to a sixth aspect, a network side device is provided, where the network side device includes a processor, a memory, and a program or instructions stored in the memory and capable of running on the processor, and when the program or the instructions are executed by the processor, the steps of the method according to the second aspect are implemented.

According to a seventh aspect, a terminal is provided, including a processor and a communications interface, where
the processor is configured to:
when a first physical uplink control channel PUCCH cell group corresponding to the terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
the communications interface is configured to:
   perform a first processing operation on the first HARQ-ACK based on the first operation, where the first processing operation includes one of the following: sending the first HARQ-ACK; or executing first behavior related to the first HARQ-ACK; and
   the first operation includes at least one of the following:
      determining a target PUCCH cell corresponding to the first HARQ-ACK; or
      determining a target PUCCH resource corresponding to the target PUCCH cell.

According to an eighth aspect, a network side device is provided, including a processor and a communications interface, where
the processor is configured to:
when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
the communications interface is configured to:
   perform a second processing operation on the first HARQ-ACK based on the first operation, where the first processing operation includes one of the following: receiving the first HARQ-ACK; or executing second behavior related to the first HARQ-ACK, where
   the first operation includes at least one of the following:
      determining a target PUCCH cell corresponding to the first HARQ-ACK; or
      determining a target PUCCH resource corresponding to the target PUCCH cell.

According to a ninth aspect, a readable storage medium is provided. The readable storage medium stores a program or instructions, and when the program or the instructions are executed by a processor, the steps of the method according to the first aspect or the steps of the method according to the second aspect are implemented.

According to a tenth aspect, a chip is provided. The chip includes a processor and a communications interface, the communication interface is coupled to the processor, and the processor is configured to run a program or instructions to implement the method according to the first aspect or the method according to the second aspect.

According to an eleventh aspect, a computer program/program product is provided, where the computer program/program product is stored in a non-transient storage medium, and the computer program/program product is executed by at least one processor to implement the method according to the first aspect or the method according to the second aspect.

In the embodiments of this application, the terminal may determine at least one of the following: a feedback PUCCH cell corresponding to HARQ-ACK for SPS; and a PUCCH cell corresponding to the HARQ-ACK for SPS; and perform a processing operation on the HARQ-ACK for SPS based on the foregoing determined content. It can be seen that the embodiments of this application provide a feedback mechanism of the HARQ-ACK for SPS, thereby ensuring feedback implementability of the HARQ-ACK for SPS, so that a feedback delay of HARQ-ACK can be shortened.

### BRIEF DESCRIPTION OF DRAWINGS

FIG. 1 is a schematic diagram of a wireless communications system according to an embodiment of the present application;
FIG. 2 is a first flowchart of a feedback method according to an embodiment of this application;
FIG. 3a is a first schematic diagram of a feedback according to an embodiment of this application;
FIG. 3b is a second schematic diagram of a feedback according to an embodiment of this application;
FIG. 4 is a second flowchart of a feedback method according to an embodiment of this application;
FIG. 5 is a first structural diagram of a feedback apparatus according to an embodiment of this application;
FIG. 6 is a second structural diagram of a feedback apparatus according to an embodiment of this application;
FIG. 7 is a structural diagram of a communication device according to an embodiment of this application;
FIG. 8 is a structural diagram of a terminal according to an embodiment of this application; and
FIG. 9 is a structural diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It is worth pointing out that, the technologies described in the embodiments of this application are not limited to a long term evolution (Long Term Evolution, LTE)/LTE-advanced (LTE-Advanced, LTE-A) system, and may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A new radio (New Radio, NR) system is described below for an illustration purpose, and the term NR is used in most of the descriptions, although these technologies can also be used in an application other than an NR system application, for example, a 6^{th} generation (6^{th} Generation, 6G) communications system.

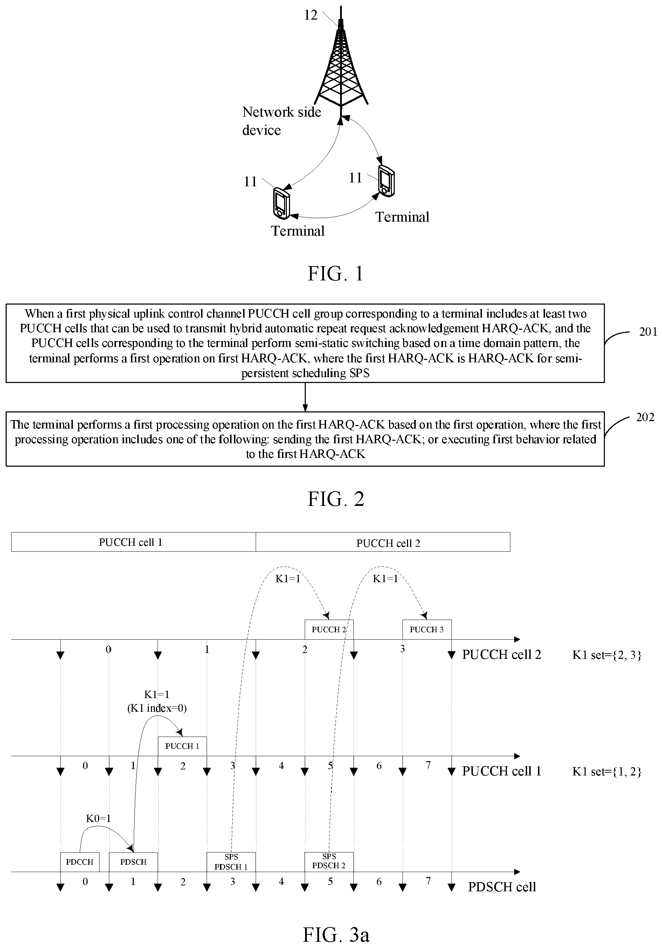

FIG. 1 is a schematic diagram of a wireless communications system according to an embodiment of the present application. The wireless communications system includes a terminal 11 and a network side device 12. The terminal 11 may also be referred to as a terminal device or user equipment (User Equipment, UE). The terminal 11 may be a terminal side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicular user equipment (Vehicle User Equipment, VUE), pedestrian user equipment (Pedestrian User Equipment, PUE), a smart home (home equipment with wireless communication functions, such as a refrigerator, a television, a washing machine, or furniture). The wearable device includes a smartwatch, a smart band, a smart headset, smart glasses, smart jewelry (a smart bracelet, a smart chain bracelet, a smart ring, a smart necklace, a smart anklet, a smart chain anklet, or the like), a smart wristband, smart clothing, a game console, or the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved NodeB (eNB), a home NodeB, a home evolved NodeB, a wireless local area network (Wireless Local Area Network, WLAN) access point, a wireless fidelity (Wireless Fidelity, WiFi) node, a transmitting receiving point (Transmitting Receiving Point, TRP), or another appropriate term in the field. As long as a same technical effect is achieved, the base station is not limited to a specific technical term. It should be noted that only a base station in the NR system is used as an example in the embodiments of this application, but a specific type of the base station is not limited.

For ease of understanding, the following describes some content in the embodiments of this application.
1. SPS physical downlink shared channel (Physical Downlink Shared Channel, PDSCH) transmission and a feedback of HARQ-ACK of the SPS physical downlink shared channel transmission.

The SPS PDSCH transmission is described in new radio (New Radio, NR). The SPS PDSCH transmission is PDSCH transmission periodically initiated after downlink SPS transmission is activated. The SPS PDSCH transmission is not indicated by corresponding DCI, and the transmission and a corresponding HARQ-ACK feedback are performed in a predefined manner.

For downlink SPS transmission of the NR release 15 (Rel-15), a network side may ensure that in a PUCCH cell group (cell group) configured for UE, a maximum of a single serving cell configures a single SPS configuration (SPS-Config) on an active bandwidth part (Bandwidth Part, BWP), and a corresponding SPS PDSCH transmission interval is at least 10 milliseconds. For SPS PDSCH transmission that ends in a slot n, the UE feeds back, in a slot (n+k), HARQ-ACK corresponding to the SPS PDSCH transmission, where k is determined by an indicator field "PDSCH-to-HARQ-timing-indicator" in DCI for activating/reactivating the SPS PDSCH transmission.

In the URLLC release 16 (Rel-16), to shorten a transmission delay of service data as much as possible, the network side may configure, for single UE, a plurality of sets of SPS-Config that simultaneously take effective (a maximum of eight sets may be simultaneously configured on a BWP of a single serving cell), and a corresponding SPS PDSCH transmission interval may be shortened to a minimum of a single slot. Because of an increase in a quantity of SPS-Config and a reduction in an SPS PDSCH transmission cycle, it is likely that more than one piece of HARQ-ACK for SPS needs to be fed back in a single slot (Slot)/sub-slot (Sub-slot) of a PUCCH cell group. In this case, the HARQ-ACK for SPS may be concatenated into a codebook for transmission.

2. PUCCH carrier switching (PUCCH carrier switching).

In research of the URLLC release 17 (Rel-17), to shorten a feedback delay of the HARQ-ACK as much as possible, the PUCCH carrier switching is proposed, that is, a carrier for PUCCH transmission may be switched. The PUCCH carrier switching may be applied to HARQ-ACK transmission or another uplink control information (Uplink Control Information, UCI) type. An application scenario for the PUCCH carrier switching may include the following features:
uplink carrier aggregation (Carrier Aggregation, CA) is configured for UE and the UE has a plurality of serving cells in an uplink; and
a time division duplex (Time Division Duplex, TDD) pattern between different (uplink) serving cells of the UE are complementary to each other, that is, uplink resources of each serving cell are interleaved with each other in a time domain. Switching the serving cell may shorten, as much as possible, a delay of obtaining the uplink resource.

Optionally, the application scenario for the PUCCH carrier switching may include an inter-band (Inter-band) scenario.

The PUCCH carrier switching may support two manners: switching based on a DCI dynamic indication (Alt. 1) and semi-static switching (Alt. 2C) based on a time domain pattern (Time domain pattern). That is, the carrier for the PUCCH transmission may be dynamically switched based on the DCI, or semi-statically switched based on the time domain pattern.

In this embodiment of this application, it is considered that one cell corresponds to one active carrier. Therefore, the PUCCH carrier switching may be equivalently replaced with PUCCH cell switching (PUCCH cell switching). A HARQ-ACK transmission carrier may be understood as a PUCCH cell in which a HARQ-ACK feedback is located.

An initial X corresponding to HARQ-ACK may be understood as an X that is determined at a first moment and that is used during the HARQ-ACK transmission or in which the HARQ-ACK transmission is located. The first moment may be an activation moment or a reactivation moment of the SPS PDSCH transmission.

A target X corresponding to HARQ-ACK may be understood as an X used during actual HARQ-ACK transmission or in which actual HARQ-ACK transmission is located.

X may be represented by a PUCCH cell, a time unit, and a PUCCH resource. For example:
An initial PUCCH cell corresponding to HARQ-ACK may be understood as a PUCCH cell that is determined at a first moment and in which the HARQ-ACK transmission is located. A target PUCCH cell corresponding to HARQ-ACK may be understood as a PUCCH cell in which actual HARQ-ACK transmission is located.

An initial time unit corresponding to HARQ-ACK may be understood as a time unit that is determined at a first moment and in which the HARQ-ACK transmission is located. A target time unit corresponding to HARQ-ACK may be understood as a time unit in which the actual HARQ-ACK transmission is located.

An initial PUCCH resource corresponding to HARQ-ACK may be understood as a PUCCH resource that is determined at a first moment and that is used during the actual HARQ-ACK transmission or a PUCCH resource that actually carries the HARQ-ACK. A target PUCCH resource corresponding to HARQ-ACK may be understood as a PUCCH resource used during the actual HARQ-ACK transmission or a PUCCH resource that actually carries the HARQ-ACK.

It should be noted that an initial X corresponding to HARQ-ACK may be the same as or different from a target X corresponding to the HARQ-ACK.

A unit of the time unit may be a slot (Slot), a sub-slot (Sub-slot), a symbol (Symbol), or the like, and may specifically be determined based on an actual requirement. This is not limited in this embodiment of this application.

A time domain feedback offset may be expressed as K1. However, this embodiment is not limited thereto. For ease of understanding, K1 is used to express the time domain feedback offset in the following examples for description. However, this does not limit an expression form of the time domain feedback offset. For example, the time domain feedback offset may be expressed as a time domain offset expressed by using a time unit as a granularity based on a reference moment or a starting moment.

The embodiments of this application are described below in detail by using some embodiments and application scenarios of the embodiments with reference to the accompanying drawings.

FIG. 2 is a flowchart of a feedback method according to an embodiment of this application. The feedback method in FIG. 2 may be performed by a terminal. As shown in FIG. 2, the feedback method may include the following steps:
Step 201: When a first physical uplink control channel PUCCH cell group corresponding to the terminal includes at least two PUCCH cells that can be used to transmit hybrid automatic repeat request acknowledgement HARQ-ACK, and semi-static switching can be performed among the PUCCH cells corresponding to the terminal based on a time domain pattern, the terminal performs a first operation on first HARQ-ACK, where the first HARQ-ACK is HARQ-ACK for semi-persistent scheduling SPS.

During specific implementation, the first HARQ-ACK may be any piece of HARQ-ACK for SPS of the terminal. A first PUCCH cell group may be any PUCCH cell group corresponding to the terminal. The first PUCCH cell group includes two or more PUCCH cells. Therefore, the terminal may perform PUCCH cell switching in the first PUCCH cell group for HARQ-ACK, to shorten a feedback delay of the HARQ-ACK. In this embodiment of this application, the PUCCH cell may be semi-statically switched based on the time domain pattern.

In this embodiment of this application, the first operation may include at least one of the following:
(1) determining a target PUCCH cell corresponding to the first HARQ-ACK; and
(2) determining a target PUCCH resource corresponding to the target PUCCH cell.

In (1), the target PUCCH cell may be understood as a PUCCH cell for actually transmitting the first HARQ-ACK. The target PUCCH cell may be any PUCCH cell in the first PUCCH cell group.

It should be noted that the target PUCCH cell may be the same as or different from an initial PUCCH cell corresponding to the first HARQ-ACK. Details may be determined based on an actual situation. This is not limited in this embodiment of this application.

In (2), the target PUCCH resource may be understood as a PUCCH resource actually used for feeding back the first HARQ-ACK.

Step 202: The terminal performs a first processing operation on the first HARQ-ACK based on the first operation.

During specific implementation, the first processing operation may be expressed as either of the following:
sending the first HARQ-ACK; and
performing first behavior related to the first HARQ-ACK.

It should be noted that, in this embodiment of this application, the first behavior may include any one of the following:
(i) discarding the first HARQ-ACK;
(ii) deferring a time of sending the first HARQ-ACK; and
(iii) discarding current transmission of the first HARQ-ACK.

During specific implementation, in (i), the terminal may directly discard the first HARQ-ACK, and no longer consider retransmission/a recovery operation of the first HARQ-ACK subsequently.

In (ii), the terminal may temporarily suspend transmission of the first HARQ-ACK, and delay the transmission of the first HARQ-ACK.

In (iii), the terminal can temporarily discard the first HARQ-ACK, and subsequently can implement the transmission of the first HARQ-ACK through retransmission and another operation.

During implementation, an implementation of the processing operation is related to content of the first operation. For example:
When the target PUCCH cell is in an available state for the first HARQ-ACK, the terminal may send the first HARQ-ACK in a target time unit of the target PUCCH cell by using the target PUCCH resource.

When the target PUCCH cell is in an unavailable state for the first HARQ-ACK, the terminal may execute the first behavior related to the first HARQ-ACK.

It should be noted that the foregoing implementations are merely examples. For details, refer to the following descriptions.

In the feedback method in this application, the terminal may determine at least one of the following: a feedback PUCCH cell corresponding to HARQ-ACK for SPS; and a PUCCH resource corresponding to the HARQ-ACK for SPS; and perform a processing operation on the HARQ-ACK for SPS based on the foregoing determined content. It can be seen that this embodiment of this application provides a feedback mechanism of the HARQ-ACK for SPS, thereby ensuring feedback implementability of the HARQ-ACK for SPS, so that a feedback delay of the HARQ-ACK can be shortened.

The first operation is specifically described below.

### For (1)

Optionally, the target PUCCH cell meets either of the following:
a PUCCH cell determining manner 1: the target PUCCH cell is determined based on the time domain pattern; and
a PUCCH cell determining manner 2: the target PUCCH cell is the initial PUCCH cell corresponding to the first HARQ-ACK.

### For the PUCCH cell determining manner 1

The terminal may ignore or override (Override) the initial PUCCH cell corresponding to the first HARQ-ACK, and determine the target PUCCH cell entirely based on the time domain pattern.

During specific implementation, the time domain pattern may correspond to one PUCCH cell at a feedback moment of the first HARQ-ACK, or one PUCCH cell may be determined at a feedback moment of the first HARQ-ACK based on the time domain pattern. In this case, the terminal may determine the PUCCH cell corresponding to the time domain pattern as the target PUCCH cell.

It should be noted that the target PUCCH cell determined based on the time domain pattern may be the initial PUCCH cell, or may be a PUCCH cell different from the initial PUCCH cell. Details may be determined based on an actual situation, and this is not limited in this embodiment of this application.

Optionally, when the target PUCCH cell is determined based on the time domain pattern, and the target PUCCH cell is different from the initial PUCCH cell corresponding to the first HARQ-ACK, a target time domain feedback offset corresponding to the first HARQ-ACK meets one of the following:
K1 determining manner 1: the target time domain feedback offset is determined based on a first time domain feedback offset index indicated by first DCI and a first time domain feedback offset set, the first time domain feedback offset set is a time domain feedback offset set corresponding to second HARQ-ACK, and the second HARQ-ACK is HARQ-ACK corresponding to physical downlink shared channel PDSCH transmission scheduled based on the first DCI;
K1 determining manner 2: the target time domain feedback offset is determined based on the first time domain feedback offset index indicated by the first DCI and a second time domain feedback offset set, and the second time domain feedback offset set is a time domain feedback offset set corresponding to the target PUCCH cell; or
K1 determining manner 3: the target time domain feedback offset is determined based on higher layer signaling, and the higher layer signaling carries a time domain feedback offset or a time domain feedback offset index.

The first DCI is used to activate or reactivate SPS PDSCH transmission corresponding to the first HARQ-ACK. Therefore, the first DCI may alternatively be referred to as activation DCI or reactivation DCI corresponding to the first HARQ-ACK.

### For the K1 determining manner 1

A target K1 set may be understood as a K1 set corresponding to a PUCCH cell corresponding to the second HARQ-ACK.

In this manner, the terminal may determine K1 corresponding to a first K1 index in a first K1 set as the target K1. It can be seen that, in this manner, K1 indicated by the first DCI for the HARQ-ACK corresponding to the PDSCH transmission scheduled by using the first DCI may be applied to HARQ-ACK feedback of subsequent SPS PDSCH transmission activated or reactivated by using the first DCI. That is, for K1 corresponding to the subsequent SPS PDSCH transmission activated or reactivated by using the first DCI, K1 indicated by the first DCI for the PDSCH transmission scheduled by using the first DCI may be followed.

It can be seen that, in this manner, a function of activation DCI or reactivation DCI corresponding to the HARQ-ACK for SPS is similar to a function of scheduling DCI corresponding to HARQ-ACK for dynamic scheduling. Specifically, the activation DCI or the reactivation DCI corresponding to the HARQ-ACK for SPS may be used to indicate K1 corresponding to the HARQ-ACK for SPS.

It should be noted that, in this manner, the target K1 may be or may not be in a K1 set corresponding to the target PUCCH cell.

For ease of understanding, refer to FIG. 3a.

In FIG. 3a, a PDSCH is scheduled by using the first DCI and the first DCI is used to activate or reactivate an SPS PDSCH 1 and an SPS PDSCH 2. AK1 index indicated by the first DCI is 0.

HARQ-ACK corresponding to the PDSCH scheduled by using the first DCI is fed back in a PUCCH cell 1, and a K1 set corresponding to the PUCCH cell 1 is {1, 2}. Therefore, K1 corresponding to the PDSCH scheduled by using the first DCI is 1.

The SPS PDSCH 1 and the SPS PDSCH 2 point to a PUCCH cell 2, and a K1 set corresponding to the PUCCH cell 2 is {2, 3}. However, because in the K1 determining manner 1, for K1 corresponding to the subsequent SPS PDSCH transmission activated or reactivated by using the first DCI, K1 indicated by the first DCI for the PDSCH transmission scheduled by using the first DCI may be followed. Therefore, K1=1 corresponding to the SPS PDSCH 1 and the SPS PDSCH 2 is not in the K1 set corresponding to the PUCCH cell 2.

### For the K1 determining manner 2

In this manner, the terminal may follow the K1 index indicated by the first DCI to determine, as the target K1, K1 corresponding to the K1 index in the K1 set corresponding to the target PUCCH cell. In this case, the target K1 is in the K1 set corresponding to the target PUCCH cell, thereby ensuring that a type (Type)-1 HARQ-ACK codebook constructed for the target PUCCH cell includes a HARQ-ACK bit corresponding to the HARQ-ACK for SPS, simplifying a codebook construction process, and reducing complexity.

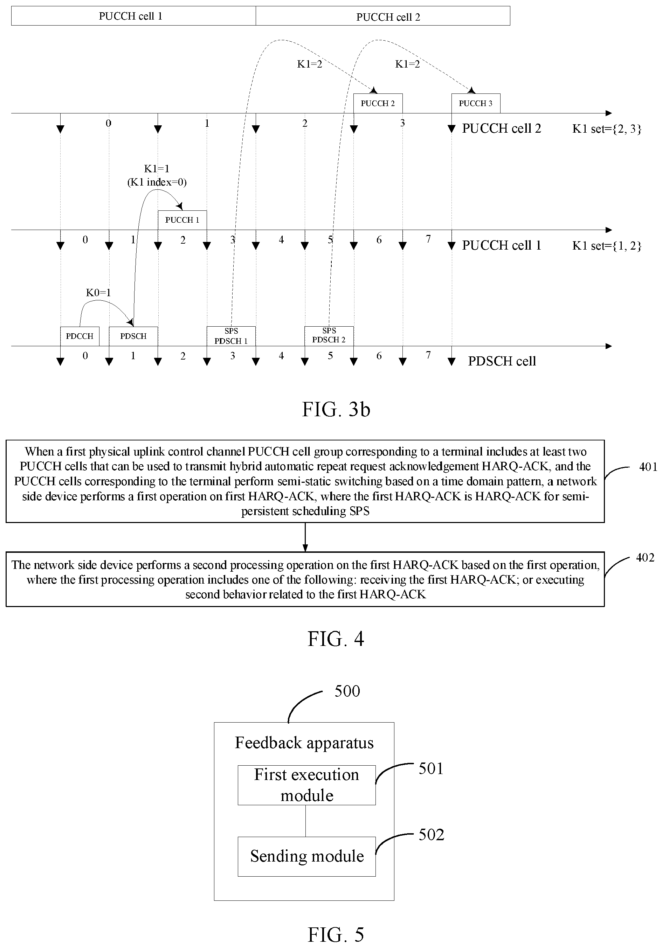

For ease of understanding, refer to FIG. 3b.

In FIG. 3b, a PDSCH is scheduled by using the first DCI and the first DCI is used to activate or reactivate an SPS PDSCH 1 and an SPS PDSCH 2. The K1 index indicated by the first DCI is 0.

The HARQ-ACK corresponding to the PDSCH scheduled by using the first DCI is fed back in a PUCCH cell 1, and a K1 set corresponding to the PUCCH cell 1 is {1, 2}. Therefore, K1 corresponding to the PDSCH scheduled by using the first DCI is 1.

The SPS PDSCH 1 and the SPS PDSCH 2 point to a PUCCH cell 2, and a K1 set corresponding to the PUCCH cell 2 is {2, 3 }. In the K1 determining manner 2, the terminal may determine, as K1 corresponding to the SPS PDSCH 1 and the SPS PDSCH 2, K1 with a K1 index of 0 in the K1 set={2, 3} corresponding to the PUCCH cell 2. Therefore, K1 corresponding to the SPS PDSCH 1 and the SPS PDSCH 2 is 2.

It should be noted that, to ensure that K 1 corresponding to the K1 index indicated by the first DCI can be found in the K1 set corresponding to the target PUCCH cell, optionally, it may be avoided that the K1 index indicated by the first DCI is an illegal value relative to the K1 set corresponding to the target PUCCH cell. For example, when the K1 index is numbered starting from 0, a value of the K1 index indicated by the first DCI may be smaller than a quantity of K1 included in the K1 set corresponding to the target PUCCH cell.

### For the K1 determining manner 3

In this manner, when higher layer signaling carries K1, the terminal may determine, as the target K1, K1 carried by the higher layer signaling.

When the higher layer signaling carries a K1 index, the terminal may determine, as the target K1, K1 corresponding to the K1 index in the K1 set corresponding to the target PUCCH cell. A difference between the K1 determining manner 3 and the K1 determining manner 2 is that manners of obtaining the K1 index are different. In this case, the terminal obtains the K1 index from the higher layer signaling. In the K1 determining manner 2, the terminal obtains the K1 index from the first DCI.

### For the PUCCH cell determining manner 2

A manner of determining the initial PUCCH cell is not limited in this embodiment of this application. Optionally, the initial PUCCH cell may be any one of the following:
a PUCCH cell (cell) indicated by the first DCI;
a PUCCH cell in which a PDSCH feedback scheduled by using the first DCI is located;
a PUCCH cell configured by using the higher layer signaling; and
a PUCCH cell specified in a protocol, such as a primary cell (Primary cell, PCell) in a primary cell group, or a primary secondary cell (Primary Secondary Cell, PSCell) or a PUCCH secondary cell (Secondary Cell, Scell) in a secondary cell group.

In the PUCCH cell determining manner 2, the first HARQ-ACK is transmitted only on the initial PUCCH cell corresponding to the first HARQ-ACK. In the PUCCH cell determining manner 2, the PUCCH cell determining manner may be implemented in either of the following manners:

PUCCH cell determining manner 2-1: The first HARQ-ACK is transmitted only when the initial PUCCH cell corresponding to the first HARQ-ACK is determined to be in an available state based on the time domain pattern.

Optionally, that the terminal performs a processing operation on the first HARQ-ACK based on the first operation includes:
determining, by the terminal, an available state of the initial PUCCH cell at a feedback moment of the first HARQ-ACK based on the time domain pattern; and
when the initial PUCCH cell is in an unavailable state at the feedback moment, executing, by the terminal, first behavior related to the first HARQ-ACK.

That is, when the initial PUCCH cell is in the unavailable state at the feedback moment, that is, when the initial PUCCH cell is not in an active state or the available state at the feedback moment, the first HARQ-ACK is not actually transmitted. In this case, a feedback in a PUCCH cell other than an active PUCCH cell determined based on the time domain pattern may be avoided.

It can be understood that, when the initial PUCCH cell is in the available state at the feedback moment, the terminal may send the first HARQ-ACK.

PUCCH cell determining manner 2-2: The first HARQ-ACK is always transmitted on the initial PUCCH cell corresponding to the first HARQ-ACK, and transmission of the first HARQ-ACK is not affected, constrained, or limited by the time domain pattern.

Optionally, performing a processing operation on the first HARQ-ACK includes:
sending the first HARQ-ACK on the initial PUCCH cell.

In this manner, the HARQ-ACK for SPS may be fed back in the PUCCH cell other than the active PUCCH cell determined based on the time domain pattern, and corresponding HARQ-ACK information needs to be fed back in more than one PUCCH cell (when UCI information such as HARQ-ACK also needs to be transmitted in the active PUCCH cell determined based on the time domain pattern). When the corresponding HARQ-ACK information needs to be fed back in more than one PUCCH cell, if the HARQ-ACK meets a predefined condition, for example, time domain overlapping, multiplexing transmission therebetween may be considered.

### For (2)

Optionally, the target PUCCH resource meets one of the following:
PUCCH resource determining manner 1: when a first SPS configuration indicates a target PUCCH resource identifier, the target PUCCH resource is a PUCCH resource corresponding to the target PUCCH resource identifier;
PUCCH resource determining manner 2: when the first SPS configuration indicates a PUCCH cell resource list, and a target PUCCH resource allocation record corresponding to the target PUCCH cell exists in the PUCCH cell resource list, the target PUCCH resource is determined based on the target PUCCH resource allocation record; or
PUCCH resource determining manner 3: the target PUCCH resource is one PUCCH resource in a target PUCCH resource list, and the target PUCCH resource list corresponds to the target PUCCH cell, where
the first SPS configuration corresponds to the first HARQ-ACK.

### For the PUCCH resource determining manner 1

The terminal may determine, as the target PUCCH resource, the PUCCH resource corresponding to the PUCCH resource identifier indicated by the first SPS configuration. During specific implementation, the first SPS configuration may indicate a single PUCCH resource identifier by using a parameter SPS-Config->nlPUCCH-AN. However, this embodiment of this application is not limited thereto.

It should be noted that the target PUCCH resource identifier may be applied to each PUCCH cell in the first PUCCH cell group, that is, the PUCCH resource corresponding to the target PUCCH resource identifier may be configured/reserved in each PUCCH cell, and is used for a feedback, in each PUCCH cell, of HARQ-ACK corresponding to first SPS Config.

Optionally, the target PUCCH resource identifier corresponds to P PUCCH cells, and P is a positive integer; and
when the P PUCCH cells include the target PUCCH cell, the target PUCCH resource is the PUCCH resource corresponding to the target PUCCH resource identifier.

In the optional implementation, a PUCCH cell list (or a PUCCH cell index (index) list) may be configured for the target PUCCH resource identifier; and the PUCCH resource corresponding to the target PUCCH resource identifier is configured/reserved only in each PUCCH cell in the list, and is used for the feedback, in each PUCCH cell in this list, of the HARQ-ACK corresponding to the first SPS Config.

### For the PUCCH resource determining manner 2

In this manner, the first SPS configuration indicates a PUCCH cell resource list, and the list may include PUCCH resource allocation records respectively corresponding to one or more PUCCH cells. Optionally, the list may include PUCCH resource allocation records respectively corresponding to all or some of PUCCH cells in the first PUCCH cell group.

A PUCCH resource allocation record corresponding to a PUCCH cell may include:
a first index corresponding to the PUCCH cell; and
a PUCCH resource identifier of a PUCCH resource corresponding to the PUCCH cell.

During specific implementation, the first index may be either of the following:
a PUCCH cell index of the PUCCH cell; and
a list index.

In this embodiment of this application, the PUCCH cell index may be understood as any one of the following:
a cell index (Cell index) corresponding to the PUCCH cell, that is, an index of a serving cell corresponding to the PUCCH cell or in which the PUCCH cell is located;
an uplink (Uplink, UL) serving cell index (UL Serving cell index) corresponding to the PUCCH cell, that is, an index of an uplink serving cell corresponding to the PUCCH cell or in which the PUCCH cell is located; and
an index of the PUCCH cell in a cell set in which transmission of a PUCCH is allowed, where the index can be numbered starting from 0.

When the first index is the list index, when determining a PUCCH cell corresponding to a PUCCH resource allocation record, the terminal may first determine a PUCCH cell index equal to the list index in the PUCCH resource allocation record, and then determine a PUCCH cell corresponding to the equal PUCCH cell index as the PUCCH cell corresponding to the PUCCH resource allocation record.

The terminal may determine, as the target PUCCH resource, the PUCCH resource corresponding to the PUCCH resource identifier in a target PUCCH resource allocation record. The target PUCCH resource allocation record herein corresponds to the target PUCCH cell.

### For the PUCCH resource determining manner 3

In this manner, a PUCCH resource list is configured for the target PUCCH cell, that is, the target PUCCH resource list. During specific implementation, the target PUCCH resource list may be configured for the target PUCCH cell by using a parameter PUCCH-Config->sps-PUCCH-AN-List-rl6. However, this embodiment of this application is not limited thereto.

PUCCH resources in the target PUCCH resource list are all located in the PUCCH cell, and the terminal may select a PUCCH resource from the PUCCH resources as the target PUCCH resource. For example, the terminal may select a PUCCH resource from the target PUCCH resource list as the target PUCCH resource based on a quantity of bits of the HARQ-ACK codebook corresponding to the first HARQ-ACK.

In this embodiment of this application, that the terminal performs a processing operation on the first HARQ-ACK based on the first operation includes:
when a first condition is met, executing, by the terminal, the first behavior related to the first HARQ-ACK, where the first condition includes at least one of the following:
a first SPS configuration indicates a PUCCH cell resource list, and a target PUCCH resource allocation record corresponding to the target PUCCH cell does not exist in the PUCCH cell resource list; and
the first SPS configuration indicates a target PUCCH resource identifier, and a PUCCH cell corresponding to the target resource identifier does not include the target PUCCH cell, where
the first SPS configuration corresponds to the first HARQ-ACK.

In this optional implementation, the first condition is met, indicating that the target PUCCH cell does not reserve or configure a PUCCH resource for the first SPS configuration. Therefore, the first HARQ-ACK is not actually transmitted.

FIG. 4 is a flowchart of a feedback method according to an embodiment of this application. The feedback method in FIG. 4 is performed by a network side device. As shown in FIG. 4, the feedback method may include the following steps:

Step 401: When a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, the network side device performs a first operation on first HARQ-ACK, where the first HARQ-ACK is HARQ-ACK for semi-persistent scheduling SPS.

Step 402: The network side device performs a second processing operation on the first HARQ-ACK based on the first operation, where the first processing operation includes one of the following: receiving the first HARQ-ACK; or executing second behavior related to the first HARQ-ACK.

The first operation includes at least one of the following:
determining a target PUCCH cell corresponding to the first HARQ-ACK; or
determining a target PUCCH resource corresponding to the target PUCCH cell.

In the feedback method in this embodiment, the network side device may determine at least one of the following: a feedback PUCCH cell corresponding to HARQ-ACK for SPS; and a PUCCH cell corresponding to the HARQ-ACK for SPS; and perform a processing operation on the HARQ-ACK for SPS based on the foregoing determined content. It can be seen that this embodiment of this application provides a feedback mechanism of the HARQ-ACK for SPS, thereby ensuring feedback implementability of the HARQ-ACK for SPS, so that a feedback delay of the HARQ-ACK can be shortened.

Optionally, the target PUCCH cell meets either of the following:
the target PUCCH cell is determined based on the time domain pattern; and
the target PUCCH cell is an initial PUCCH cell corresponding to the first HARQ-ACK.

Optionally, when the target PUCCH cell is determined based on the time domain pattern, and the target PUCCH cell is different from the initial PUCCH cell corresponding to the first HARQ-ACK, a target time domain feedback offset corresponding to the first HARQ-ACK meets one of the following:
the target time domain feedback offset is determined based on a first time domain feedback offset index indicated by first DCI and a first time domain feedback offset set, the first time domain feedback offset set is a time domain feedback offset set corresponding to second HARQ-ACK, and the second HARQ-ACK is HARQ-ACK corresponding to physical downlink shared channel PDSCH transmission scheduled based on the first DCI;
the target time domain feedback offset is determined based on the first time domain feedback offset index indicated by the first DCI and a second time domain feedback offset set, and the second time domain feedback offset set is a time domain feedback offset set corresponding to the target PUCCH cell; or
the target time domain feedback offset is determined based on higher layer signaling, and the higher layer signaling carries a time domain feedback offset or a time domain feedback offset index, where
the first DCI is used to activate or reactivate SPS PDSCH transmission corresponding to the first HARQ-ACK.

Optionally, when the target PUCCH cell is the initial PUCCH cell, that the network side device performs a second processing operation on the first HARQ-ACK based on the first operation includes:
determining, by the network side device, an available state of the initial PUCCH cell at a feedback moment of the first HARQ-ACK based on the time domain pattern; and
when the initial PUCCH cell is in an unavailable state at the feedback moment, executing, by the network side device, the second behavior related to the first HARQ-ACK.

Optionally, when the target PUCCH cell is the initial PUCCH cell, that the network side device performs a second processing operation on the first HARQ-ACK based on the first operation includes:
receiving the first HARQ-ACK on the initial PUCCH cell.

Optionally, the target PUCCH resource meets one of the following:
when a first SPS configuration indicates a target PUCCH resource identifier, the target PUCCH resource is a PUCCH resource corresponding to the target PUCCH resource identifier;
when the first SPS configuration indicates a PUCCH cell resource list, and a target PUCCH resource allocation record corresponding to the target PUCCH cell exists in the PUCCH cell resource list, the target PUCCH resource is determined based on the target PUCCH resource allocation record; or
the target PUCCH resource is one PUCCH resource in a target PUCCH resource list, and the target PUCCH resource list corresponds to the target PUCCH cell, where
the first SPS configuration corresponds to the first HARQ-ACK.

Optionally, the target PUCCH resource identifier corresponds to P PUCCH cells, and P is a positive integer; and
when the P PUCCH cells include the target PUCCH cell, the target PUCCH resource is the PUCCH resource corresponding to the target PUCCH resource identifier.

Optionally, that the network side device performs a second processing operation on the first HARQ-ACK based on the first operation includes:
when a first condition is met, executing, by the network side device, the second behavior related to the first HARQ-ACK, where the first condition includes at least one of the following:
a first SPS configuration indicates a PUCCH cell resource list, and a target PUCCH resource allocation record corresponding to the target PUCCH cell does not exist in the PUCCH cell resource list; and
the first SPS configuration indicates a target PUCCH resource identifier, and a PUCCH cell corresponding to the target resource identifier does not include the target PUCCH cell.

The first SPS configuration corresponds to the first HARQ-ACK.

Optionally, the second behavior includes any one of the following:
discarding receiving of the first HARQ-ACK;
deferring a time of receiving the first HARQ-ACK; and
discarding current receiving of the first HARQ-ACK.

It should be noted that this embodiment is an embodiment of the network side device corresponding to the foregoing method embodiment in FIG. 2. Therefore, reference may be made to the related description in the method embodiment shown in FIG. 2, and a same beneficial effect is achieved. To avoid repetition of description, details are not described herein again.

The plurality of optional implementations described in this embodiment of this application may be implemented in combination with each other or may be implemented separately. This is not limited in this embodiment of this application.

For ease of understanding, example descriptions are as follows:
When PUCCH carrier switching Alt. 2C is used, some solutions are described for a feedback of HARQ-ACK for SPS, and specific descriptions are provided below.

### 1. Feedback of the HARQ-ACK for SPS

During activation or reactivation of an SPS PDSCH, an (initial) PUCCH cell corresponding to the feedback of the HARQ-ACK for SPS may be determined based on a PUCCH cell indicated in SPS activation/reactivation DCI, or a PUCCH cell in which the feedback of the HARQ-ACK of PDSCH transmission scheduled by using the SPS activation/reactivation DCI is located, or a predefined rule (for example, a PUCCH cell is configured for the feedback of the HARQ-ACK by using the higher layer signaling, or a protocol specifies a PUCCH cell for the feedback of the HARQ-ACK, such as a PCell/PSCell/PUCCH SCell).

When the PUCCH carrier switching Alt. 2C is used, the PUCCH cell for the feedback of the HARQ-ACK for SPS may be determined in either of the following manners:

PUCCH cell determining manner 1: The PUCCH cell for the feedback of the HARQ-ACK for SPS is determined/changed based on the time domain pattern.

In this case, settings of the foregoing (initial) PUCCH cell are ignored or overridden (Override), and a HARQ-ACK feedback location corresponding to SPS PDSCH transmission is determined entirely based on the time domain pattern (and K1 or a K1 index indicated in the SPS activation/reactivation DCI). The feedback location includes the PUCCH cell in which the feedback is located, a time domain location of the feedback, and the like. For the operations, operations corresponding to dynamic scheduling can be followed. A difference between the feedback of the HARQ-ACK for SPS and a feedback of HARQ-ACK for dynamic scheduling is that for the two feedbacks, operations of determining a PUCCH resource (PUCCH resource) on the target PUCCH cell and a target slot/sub-slot are different (the operation of determining the PUCCH resource for the feedback of the HARQ-ACK for SPS has corresponding descriptions below). The SPS PDSCH has no corresponding scheduling DCI. However, a dynamic scheduling PDSCH has corresponding scheduling DCI, and K1 may be dynamically indicated/changed based on the scheduling DCI (the target PUCCH cell may further be explicitly indicated when needed).

For the HARQ-ACK for SPS, when the PUCCH cell is switched, K1 corresponding to the PUCCH cell may be determined in any one of the following manners:
K1 manner 1: Always follow K1 indicated/determined by the SPS activation/reactivation DCI.

In this case, K1 corresponding to the HARQ-ACK for SPS may not be in a K1 set corresponding to the target PUCCH cell. The target PUCCH cell is a PUCCH cell in which the HARQ-ACK for SPS is actually transmitted.

As shown in FIG. 3a, the PUCCH cell corresponding to the HARQ-ACK for SPS is determined/switched based on the time domain pattern, and always uses K1=1 (corresponding to the K1 index=0) indicated in the SPS activation/reactivation DCI. When a feedback is performed in a PUCCH cell 2, K1=1 is not in a K1 set applied to the PUCCH cell 2.

K1 manner 2: Keep the K1 index indicated/determined by the SPS activation/reactivation DCI unchanged.

When switching is performed to the target PUCCH cell, based on the K1 index, K1 of the corresponding index in a K1 set applied to the target PUCCH cell is used. In this case, when a parameter needs to be configured on a network side, it is avoided that the K1 index corresponding to the HARQ-ACK for SPS is an illegal value relative to the K1 set applied to the target PUCCH cell (for example, when the K1 index is numbered starting from 0, the K1 index is already >= a quantity of K1 included in the K1 set).

As shown in FIG. 3b, the K1 index indicated in the SPS activation/reactivation DCI (for example, the K1 index in the figure) is equal to 0. In this case, when switching is performed to a feedback of the HARQ-ACK for SPS in the PUCCH cell 2, based on the K1 index and the K1 set applied to the PUCCH cell 2, it can be seen that an actual applied K1 is equal to 2.

K1 manner 3: Use K1 configured by using the higher layer signaling, or the K1 index.

When K1 is directly configured by using the higher layer signaling, the configured K1 may be or may not be in the K1 set applied to the target PUCCH cell. When the configuration uses a type-1 codebook, reference is made to the foregoing descriptions for processing related to a HARQ-ACK bit sequence. When the K1 index is configured by using the higher layer signaling, K1 of the corresponding index in the K1 set applied to the target PUCCH cell is used. In this case, when a parameter needs to be configured on a network side, it is avoided that the K1 index corresponding to the HARQ-ACK for SPS is an illegal value relative to the K1 set applied to the target PUCCH cell (for example, when the K1 index is numbered starting from 0, the K1 index is already >= a quantity of K1 included in the K1 set).

A numerology (Numerology)/subcarrier spacing (Subcarrier Spacing, SCS) corresponding to K1, whether to use a slot granularity or a sub-slot granularity, and a quantity of symbols occupied by a sub-slot when the sub-slot granularity is used may be determined based on a configuration corresponding to a target PUCCH cell in which an actual feedback is located (because the PUCCH resource on the target PUCCH cell needs to be used in this case).

PUCCH cell determining manner 2: The HARQ-ACK for SPS is always fed back in the (initial) PUCCH cell.

In this case, the PUCCH cell may be determined in either of the following manners:
PUCCH cell determining manner 2-1: A PUCCH cell for actual transmission is determined entirely based on the time domain pattern. When the (initial) PUCCH cell corresponding to the HARQ-ACK for SPS is not in the active/available state based on the time domain pattern at a moment, the HARQ-ACK for SPS is not actually transmitted, to avoid a feedback in the PUCCH cell other than an active PUCCH cell determined based on the time domain pattern.

The HARQ-ACK for SPSs that are not transmitted may use any one of the following:
the HARQ-ACK for SPS is directly discarded, and retransmission/a recovery operation of the HARQ-ACK for SPS is no longer considered subsequently;
the HARQ-ACK for SPS is temporarily suspended, and transmission is delayed; and
the HARQ-ACK for SPS is temporarily discarded, and can be obtained later through retransmission and other operations.

PUCCH cell determining manner 2-2: The HARQ-ACK for SPS is always actually fed back in the (initial) PUCCH cell corresponding to the HARQ-ACK for SPS, and transmission of the HARQ-ACK for SPS is not constrained/limited by the time domain pattern.

In this case, the HARQ-ACK for SPS may be fed back in the PUCCH cell other than the active PUCCH cell determined based on the time domain pattern, and corresponding HARQ-ACK information needs to be fed back in more than one PUCCH cell (when UCI information such as HARQ-ACK also needs to be transmitted in the active PUCCH cell determined based on the time domain pattern).

When the foregoing PUCCH cell determining manner 1 is used, resources configured/reserved for the feedback of the HARQ-ACK for SPS in PUCCH cells may be different. For a PUCCH resource (corresponding to an existing parameter SPS-Config->nlPUCCH-AN) configured for each SPS Config (corresponding to a downlink BWP of a serving cell), either of the following manners may be used:

Resource configuration manner 1: A single PUCCH resource ID is indicated in each SPS Config (a parameter SPS-Config->nlPUCCH-AN may be used). The PUCCH resource ID may be applied to each PUCCH cell, that is, a PUCCH resource corresponding to the ID is configured/reserved in each PUCCH cell, and is used for a HARQ-ACK feedback of the SPS Config. Optionally, a PUCCH cell list (or a PUCCH cell index list) may be configured; and the PUCCH resource corresponding to the ID is configured/reserved in each PUCCH cell in the list, and is used for the HARQ-ACK feedback of the SPS Config.

Resource configuration manner 2: A cross-PUCCH cell resource list is indicated in each SPS Config. Each unit in the list corresponds to a PUCCH resource allocation record in a single PUCCH cell. A PUCCH cell or a PUCCH cell index (or implicitly indicated, a PUCCH cell corresponding to each record is determined based on an index a recorded in the list, and a cell index b of the PUCCH cell, or an index C in M PUCCH cells, for example, when b or c is equal to a, the record corresponds to the PUCCH cell), and a single PUCCH resource or PUCCH resource ID configured in the PUCCH cell may be indicated in each record. The foregoing cross-PUCCH cell resource list may involve all or some of PUCCH cells in the current PUCCH cell group. For a PUCCH cell that does not exist in the foregoing cross-PUCCH cell resource list, when switching is performed to the PUCCH cell based on the time domain pattern, the HARQ-ACK corresponding to the SPS Config is not actually transmitted. The HARQ-ACK for SPSs that are not transmitted may use any one of the following:
the HARQ-ACK for SPS is directly discarded, and retransmission/a recovery operation of the HARQ-ACK for SPS is no longer considered subsequently;
the HARQ-ACK for SPS is temporarily suspended, and transmission is delayed; and
the HARQ-ACK for SPS is temporarily discarded, and can be obtained later through retransmission and other operations.

A PUCCH resource list is optionally configured in each PUCCH cell. A parameter PUCCH-Config->sps-PUCCH-AN-List-r16 can be used. PUCCH resources in the PUCCH resource list are all located in the PUCCH cell. Optionally, the PUCCH resource list is configured in either all or none of the PUCCH cells.

When the HARQ-ACK for SPS needs to be fed back in a PUCCH cell based on the time domain pattern, the following operations may be performed:
if the PUCCH resource list is configured in the PUCCH cell, the Rel-16 rules are followed, and a PUCCH resource in the PUCCH resource list is selected for transmission based on a quantity of bits corresponding to HARQ-ACK for SPS codebook; otherwise
if a PUCCH resource is configured/reserved in the PUCCH cell for the SPS Config corresponding to the HARQ-ACK for SPS (for example, based on the foregoing resource configuration manner 1/2), the PUCCH resource is used for transmission; otherwise, the HARQ-ACK for SPS is not actually transmitted. The HARQ-ACK for SPSs that are not transmitted may use any one of the following:
   the HARQ-ACK for SPS is directly discarded, and retransmission/a recovery operation of the HARQ-ACK for SPS is no longer considered subsequently;
   the HARQ-ACK for SPS is temporarily suspended, and transmission is delayed; and
   the HARQ-ACK for SPS is temporarily discarded, and can be obtained later through retransmission and other operations.

It can be seen that this embodiment of this application may include at least one of the following:
1. When the PUCCH carrier switching Alt. 2C is used, the PUCCH cell for the feedback of the HARQ-ACK for SPS may be determined in any one of the following manners:
   PUCCH cell determining manner 1: The PUCCH cell for the feedback of the HARQ-ACK for SPS is determined/changed based on the time domain pattern.

For the HARQ-ACK for SPS, when the PUCCH cell is switched, K1 corresponding to the PUCCH cell may be determined in any one of the following manners:
K1 manner 1: Always follow K1 indicated/determined by the SPS activation/reactivation DCI.
K1 manner 2: Keep the K1 index indicated/determined by the SPS activation/reactivation DCI unchanged, and use, based on the K1 index, K1 of the corresponding index in the K1 set applied to the target PUCCH cell.
K1 manner 3: Use K1 configured by using the higher layer signaling, or the K1 index.

PUCCH cell determining manner 2: The HARQ-ACK for SPS is always fed back in the (initial) PUCCH cell, and is not determined/changed based on the time domain pattern.

PUCCH cell determining manner 2-1: When the (initial) PUCCH cell corresponding to the HARQ-ACK for SPS is not in the active/available state based on the time domain pattern at a moment, the HARQ-ACK for SPS is not actually transmitted, or is discarded, or transmission is delayed.

PUCCH cell determining manner 2-2: The HARQ-ACK for SPS is always actually fed back in the (initial) PUCCH cell corresponding to the HARQ-ACK for SPS, and transmission of the HARQ-ACK for SPS is not constrained/limited by the time domain pattern.

2. For a PUCCH resource configured for each SPS Config, either of the following manners may be used:
Resource configuration manner 1: A single PUCCH resource ID is indicated in each SPS Config, and the PUCCH resource corresponding to the ID is configured/reserved in each PUCCH cell (or some of the PUCCH cells explicitly indicated).

Resource configuration manner 2: A cross-PUCCH cell resource list is indicated in each SPS Config. Each unit in the list corresponds to a PUCCH resource allocation record in a single PUCCH cell.

A PUCCH resource list is optionally configured in each PUCCH cell. PUCCH resources in the PUCCH resource list are all located in the PUCCH cell.

Based on this embodiment of this application, when the PUCCH carrier switching Alt. 2C is used, the corresponding solutions are described for the related operations of the feedback of the HARQ-ACK for SPS, to ensure combined use of a PUCCH carrier switching mechanism and the SPS PDSCH transmission, thereby shortening a feedback delay for the HARQ-ACK for SPS.

It should be noted that the feedback method provided in the embodiments of this application may be performed by a feedback apparatus, or a control module that is in the feedback apparatus and that is configured to perform the feedback method. In the embodiments of this application, an example in which the feedback apparatus performs the feedback method is used to describe the feedback apparatus provided in the embodiments of this application.

As shown in FIG. 5, a feedback apparatus 500 includes:
a first execution module 501, configured to: when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
a sending module 502, configured to perform a first processing operation on the first HARQ-ACK based on the first operation, where the first processing operation includes one of the following: sending the first HARQ-ACK; or executing first behavior related to the first HARQ-ACK, where
the first operation includes at least one of the following:
   determining a target PUCCH cell corresponding to the first HARQ-ACK; or
   determining a target PUCCH resource corresponding to the target PUCCH cell.

Optionally, the target PUCCH cell meets either of the following:
the target PUCCH cell is determined based on the time domain pattern; and
the target PUCCH cell is an initial PUCCH cell corresponding to the first HARQ-ACK.

Optionally, when the target PUCCH cell is determined based on the time domain pattern, and the target PUCCH cell is different from the initial PUCCH cell corresponding to the first HARQ-ACK, a target time domain feedback offset corresponding to the first HARQ-ACK meets one of the following:
the target time domain feedback offset is determined based on a first time domain feedback offset index indicated by first DCI and a first time domain feedback offset set, the first time domain feedback offset set is a time domain feedback offset set corresponding to second HARQ-ACK, and the second HARQ-ACK is HARQ-ACK corresponding to physical downlink shared channel PDSCH transmission scheduled based on the first DCI;
the target time domain feedback offset is determined based on the first time domain feedback offset index indicated by the first DCI and a second time domain feedback offset set, and the second time domain feedback offset set is a time domain feedback offset set corresponding to the target PUCCH cell; or
the target time domain feedback offset is determined based on higher layer signaling, and the higher layer signaling carries a time domain feedback offset or a time domain feedback offset index, where
the first DCI is used to activate or reactivate SPS PDSCH transmission corresponding to the first HARQ-ACK.

Optionally, when the target PUCCH cell is the initial PUCCH cell, the sending module 502 is specifically configured to:
determine an available state of the initial PUCCH cell at a feedback moment of the first HARQ-ACK based on the time domain pattern; and
when the initial PUCCH cell is in an unavailable state at the feedback moment, execute the first behavior related to the first HARQ-ACK.

Optionally, when the target PUCCH cell is the initial PUCCH cell, the sending module 502 is specifically configured to:
send the first HARQ-ACK on the initial PUCCH cell.

Optionally, the target PUCCH resource meets one of the following:
when a first SPS configuration indicates a target PUCCH resource identifier, the target PUCCH resource is a PUCCH resource corresponding to the target PUCCH resource identifier;
when the first SPS configuration indicates a PUCCH cell resource list, and a target PUCCH resource allocation record corresponding to the target PUCCH cell exists in the PUCCH cell resource list, the target PUCCH resource is determined based on the target PUCCH resource allocation record; or
the target PUCCH resource is one PUCCH resource in a target PUCCH resource list, and the target PUCCH resource list corresponds to the target PUCCH cell, where
the first SPS configuration corresponds to the first HARQ-ACK.

Optionally, the target PUCCH resource identifier corresponds to P PUCCH cells, and P is a positive integer; and
when the P PUCCH cells include the target PUCCH cell, the target PUCCH resource is the PUCCH resource corresponding to the target PUCCH resource identifier.

Optionally, the sending module 502 is specifically configured to:
when a first condition is met, execute the first behavior related to the first HARQ-ACK, where the first condition includes at least one of the following:
a first SPS configuration indicates a PUCCH cell resource list, and a target PUCCH resource allocation record corresponding to the target PUCCH cell does not exist in the PUCCH cell resource list; and
the first SPS configuration indicates a target PUCCH resource identifier, and a PUCCH cell corresponding to the target resource identifier does not include the target PUCCH cell, where
the first SPS configuration corresponds to the first HARQ-ACK.

Optionally, the first behavior includes any one of the following:
discarding the first HARQ-ACK;
deferring a time of sending the first HARQ-ACK; and
discarding current transmission of the first HARQ-ACK.

The feedback apparatus in this embodiment of this application may be an apparatus or an apparatus or electronic device with an operating system, or may be a component, an integrated circuit, or a chip in the terminal. The apparatus or electronic device may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The feedback apparatus 500 provided in this embodiment of this application can implement each process implemented in the method embodiment in FIG. 2, and a same technical effect is achieved. To avoid repetition, details are not described herein again.

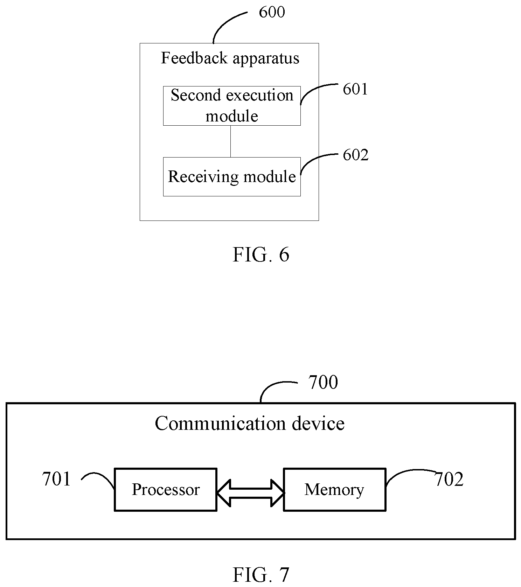

As shown in FIG. 6, a feedback apparatus 600 includes:
a second execution module 601, configured to: when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
a receiving module 602, configured to perform a second processing operation on the first HARQ-ACK based on the first operation, where the first processing operation includes one of the following: receiving the first HARQ-ACK; or executing second behavior related to the first HARQ-ACK, where
the first operation includes at least one of the following:
   determining a target PUCCH cell corresponding to the first HARQ-ACK; or
   determining a target PUCCH resource corresponding to the target PUCCH cell.

Optionally, the target PUCCH cell meets one of the following:
the target PUCCH cell is determined based on the time domain pattern; or
the target PUCCH cell is an initial PUCCH cell corresponding to the first HARQ-ACK.

Optionally, when the target PUCCH cell is determined based on the time domain pattern, and the target PUCCH cell is different from the initial PUCCH cell corresponding to the first HARQ-ACK, a target time domain feedback offset corresponding to the first HARQ-ACK meets one of the following:
the target time domain feedback offset is determined based on a first time domain feedback offset index indicated by first DCI and a first time domain feedback offset set, the first time domain feedback offset set is a time domain feedback offset set corresponding to second HARQ-ACK, and the second HARQ-ACK is HARQ-ACK corresponding to physical downlink shared channel PDSCH transmission scheduled based on the first DCI;
the target time domain feedback offset is determined based on the first time domain feedback offset index indicated by the first DCI and a second time domain feedback offset set, and the second time domain feedback offset set is a time domain feedback offset set corresponding to the target PUCCH cell; or
the target time domain feedback offset is determined based on higher layer signaling, and the higher layer signaling carries a time domain feedback offset or a time domain feedback offset index, where
the first DCI is used to activate or reactivate SPS PDSCH transmission corresponding to the first HARQ-ACK.

Optionally, when the target PUCCH cell is the initial PUCCH cell, the receiving module 602 is specifically configured to:
determine an available state of the initial PUCCH cell at a feedback moment of the first HARQ-ACK based on the time domain pattern; and
when the initial PUCCH cell is in an unavailable state at the feedback moment, execute the second behavior related to the first HARQ-ACK.

Optionally, when the target PUCCH cell is the initial PUCCH cell, the receiving module 602 is specifically configured to:
receive the first HARQ-ACK on the initial PUCCH cell.

Optionally, the target PUCCH resource meets one of the following:
when a first SPS configuration indicates a target PUCCH resource identifier, the target PUCCH resource is a PUCCH resource corresponding to the target PUCCH resource identifier;
when the first SPS configuration indicates a PUCCH cell resource list, and a target PUCCH resource allocation record corresponding to the target PUCCH cell exists in the PUCCH cell resource list, the target PUCCH resource is determined based on the target PUCCH resource allocation record; or
the target PUCCH resource is one PUCCH resource in a target PUCCH resource list, and the target PUCCH resource list corresponds to the target PUCCH cell, where
the first SPS configuration corresponds to the first HARQ-ACK.

Optionally, the target PUCCH resource identifier corresponds to P PUCCH cells, and P is a positive integer; and
when the P PUCCH cells include the target PUCCH cell, the target PUCCH resource is the PUCCH resource corresponding to the target PUCCH resource identifier.

Optionally, the receiving module 602 is specifically configured to:
when a first condition is met, execute the second behavior related to the first HARQ-ACK, where the first condition includes at least one of the following:
a first SPS configuration indicates a PUCCH cell resource list, and a target PUCCH resource allocation record corresponding to the target PUCCH cell does not exist in the PUCCH cell resource list; and
the first SPS configuration indicates a target PUCCH resource identifier, and a PUCCH cell corresponding to the target resource identifier does not include the target PUCCH cell, where
the first SPS configuration corresponds to the first HARQ-ACK.

Optionally, the second behavior includes any one of the following:
discarding receiving of the first HARQ-ACK;
deferring a time of receiving the first HARQ-ACK; and
discarding current receiving of the first HARQ-ACK.

The feedback apparatus in this embodiment of this application may be an apparatus or an apparatus or electronic device with an operating system, or may be a component, an integrated circuit, or a chip in the network side device. The network side device may include but is not limited to the types of the network side device 12 listed above. This is not specifically limited in this embodiment of this application.

The feedback apparatus 600 provided in this embodiment of this application can implement the processes implemented in the method embodiment in FIG. 4, and a same technical effect is achieved. To avoid repetition, details are not described herein again.

Optionally, as shown in FIG. 7, an embodiment of this application further provides a communication device 700, including a processor 701, a memory 702, and a program or instructions stored in the memory 702 and capable of running on the processor 701. For example, when the communication device 700 is a terminal, when the program or the instructions are executed by the processor 701, each process of the method embodiment in FIG. 2 is implemented, and a same technical effect is achieved. When the communication device 700 is a network side device, when the program or the instructions are executed by the processor 701, each process of the method embodiment in FIG. 4 is implemented, and a same technical effect is achieved. To avoid repetition, details are not described herein again.

An embodiment of this application further provides a terminal, including a processor and a communications interface, where
the processor is configured to:
when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
the communications interface is configured to:
   perform a first processing operation on the first HARQ-ACK based on the first operation, where the first processing operation includes one of the following: sending the first HARQ-ACK; or executing first behavior related to the first HARQ-ACK; and
   the first operation includes at least one of the following:
      determining a target PUCCH cell corresponding to the first HARQ-ACK; or
      determining a target PUCCH resource corresponding to the target PUCCH cell.

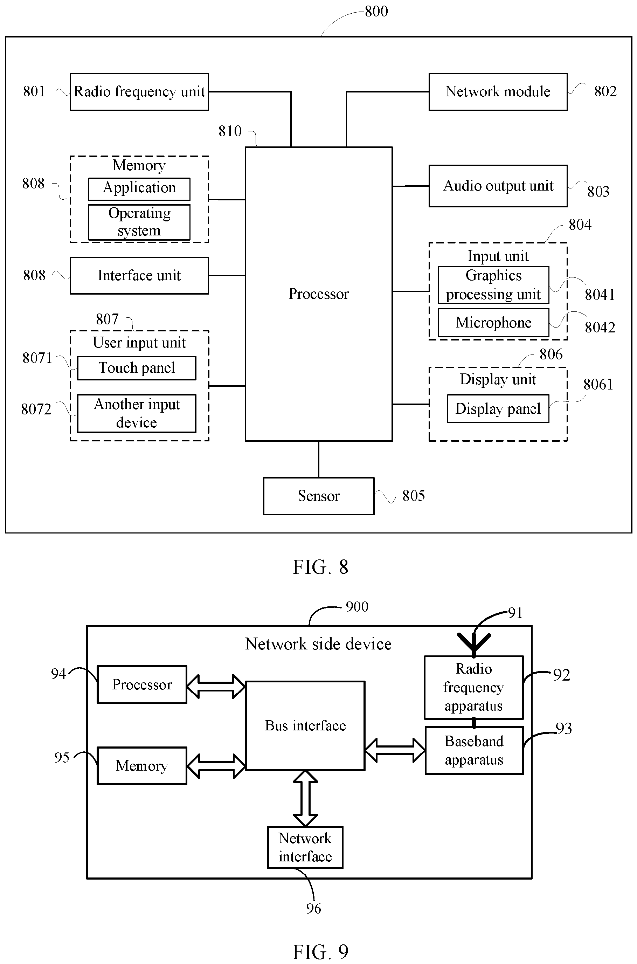

This terminal embodiment corresponds to the foregoing method embodiment on the terminal side. Each implementation process and implementation of the foregoing method embodiment may be applicable to this terminal embodiment, and a same technical effect can be achieved. Specifically, FIG. 8 is a schematic diagram of a hardware structure of a terminal according to an embodiment of this application.

A terminal 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061. Optionally, the display panel 8061 may be configured in a form such as a liquid crystal display or an organic light-emitting diode. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or instructions and various data. The memory 809 may mainly include a program or instruction storage area and a data storage area. The program or instruction storage area may store an operating system, and an application or instructions required by at least one function (for example, a sound playing function or an image playing function). In addition, the memory 809 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 810 may include one or more processing units. Optionally, the processor 810 may integrate an application processor and a modem processor. The application processor mainly processes an operating system, a user interface, an application program, instructions, and the like. The modem processor mainly processes wireless communication, such as a baseband processor. It may be understood that the modem processor may alternatively be not integrated in the processor 810, where
the processor 810 is configured to:
when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
the radio frequency unit 801 is configured to:
   perform a first processing operation on the first HARQ-ACK based on the first operation, where the first processing operation includes one of the following: sending the first HARQ-ACK; or executing first behavior related to the first HARQ-ACK; and
   the first operation includes at least one of the following:
      determining a target PUCCH cell corresponding to the first HARQ-ACK; or
      determining a target PUCCH resource corresponding to the target PUCCH cell.

It should be noted that the terminal 800 in this embodiment may implement each process in the method embodiment of FIG. 2 in the embodiments of this application, and a same beneficial effect is achieved. To avoid repetition, details are not described herein again.

An embodiment of this application further provides a network side device, including a processor and a communications interface, where
the processor is configured to:
when a first physical uplink control channel PUCCH cell group corresponding to a terminal includes at least two PUCCH cells that can be used to transmit hybrid automatic repeat request acknowledgement HARQ-ACK, and semi-static switching can be performed among the PUCCH cells corresponding to the terminal based on a time domain pattern, perform a first operation on first HARQ-ACK, where the first HARQ-ACK is HARQ-ACK for semi-persistent scheduling SPS; and
the communications interface is configured to:
   perform a second processing operation on the first HARQ-ACK based on the first operation, where the first processing operation includes one of the following: receiving the first HARQ-ACK; or executing second behavior related to the first HARQ-ACK, where
   the first operation includes at least one of the following:
      determining a target PUCCH cell corresponding to the first HARQ-ACK; or
      determining a target PUCCH resource corresponding to the target PUCCH cell.

The network side device embodiment corresponds to the foregoing method embodiment of the network side device. Each implementation process and implementation of the foregoing method embodiment may be applicable to the network side device embodiment, and a same technical effect can be achieved.

Specifically, an embodiment of this application further provides a network side device. As shown in FIG. 9, a network device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes information that needs to be sent, and sends processed information to the radio frequency apparatus 92. The radio frequency apparatus 92 processes the received information, and sends processed information by using the antenna 91.

The frequency band processing apparatus may be located in the baseband apparatus 93. The method performed by the network side device in the foregoing embodiment may be implemented in the baseband apparatus 93. The baseband apparatus 93 includes a processor 94 and a memory 95.

The baseband apparatus 93 may include, for example, at least one baseband board, where a plurality of chips are disposed on the baseband board. As shown in FIG. 9, one chip is, for example, the processor 94, which is connected to the memory 95, to invoke a program in the memory 95 to perform operations of the network device shown in the foregoing method embodiment.

The baseband apparatus 93 may further include a network interface 96, configured to exchange information with the radio frequency apparatus 92. For example, the interface is a common public radio interface (common public radio interface, CPRI).

Specifically, the network side device in this embodiment of this application further includes: instructions or a program stored in the memory 95 and capable of running on the processor 94. The processor 94 invokes the instructions or program in the memory 95 to perform the processes of the method embodiment in FIG. 4, or the method performed by the modules shown in FIG. 6, and a same technical effect is achieved. To avoid repetition, details are not described herein again.

An embodiment of this application further provides a computer-readable storage medium. The computer-readable storage medium stores a computer program. When executing the computer program, a processor implements the foregoing processes of the foregoing feedback or and feedback method embodiment and a same technical effect can be achieved. To avoid repetition, details are not described herein again. The computer-readable storage medium may be a read-only memory (Read-Only Memory, ROM), a random access memory (Random Access Memory, RAM), a magnetic disk, a compact disc, or the like.

An embodiment of this application further provides a readable storage medium. The readable storage medium stores a program or instructions. When the program or the instructions are executed by a processor, each process in the method embodiment in FIG. 2 or FIG. 4 is implemented, and a same technical effect is achieved. To avoid repetition, details are not described herein again.

The processor is a processor in the terminal in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communication interface. The communication interface is coupled to the processor, and when the processor is configured to run a program or instructions, each process of the method embodiment in FIG. 2 or FIG. 4 is implemented, and a same technical effect is achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A feedback method, comprising:
when a first physical uplink control channel PUCCH cell group corresponding to a terminal comprises at least two PUCCH cells that can be used to transmit hybrid automatic repeat request acknowledgement HARQ-ACK, and semi-static switching can be performed among the PUCCH cells corresponding to the terminal based on a time domain pattern, performing, by the terminal, a first operation on first HARQ-ACK, wherein the first HARQ-ACK is HARQ-ACK for semi-persistent scheduling SPS; and
performing, by the terminal, a first processing operation on the first HARQ-ACK based on the first operation, wherein the first processing operation comprises one of the following: sending the first HARQ-ACK; or executing first behavior related to the first HARQ-ACK; and
the first operation comprises at least one of the following:
determining a target PUCCH cell corresponding to the first HARQ-ACK; or
determining a target PUCCH resource corresponding to the target PUCCH cell.

2. The method according to claim 1, wherein the target PUCCH cell meets either of the following:
the target PUCCH cell is determined based on the time domain pattern; and
the target PUCCH cell is an initial PUCCH cell corresponding to the first HARQ-ACK.

3. The method according to claim 2, wherein when the target PUCCH cell is determined based on the time domain pattern, and the target PUCCH cell is different from the initial PUCCH cell corresponding to the first HARQ-ACK, a target time domain feedback offset corresponding to the first HARQ-ACK meets one of the following:
the target time domain feedback offset is determined based on a first time domain feedback offset index indicated by first DCI and a first time domain feedback offset set, wherein the first time domain feedback offset set is a time domain feedback offset set corresponding to second HARQ-ACK, and the second HARQ-ACK is HARQ-ACK corresponding to physical downlink shared channel PDSCH transmission scheduled by the first DCI;
the target time domain feedback offset is determined based on the first time domain feedback offset index indicated by the first DCI and a second time domain feedback offset set, and the second time domain feedback offset set is a time domain feedback offset set corresponding to the target PUCCH cell; or
the target time domain feedback offset is determined based on higher layer signaling, and the higher layer signaling carries a time domain feedback offset or a time domain feedback offset index, wherein
the first DCI is used to activate or reactivate SPS PDSCH transmission corresponding to the first HARQ-ACK.

4. The method according to claim 2, wherein when the target PUCCH cell is the initial PUCCH cell, the performing, by the terminal, a first processing operation on the first HARQ-ACK based on the first operation comprises:
determining, by the terminal, an available state of the initial PUCCH cell at a feedback moment of the first HARQ-ACK based on the time domain pattern; and
when the initial PUCCH cell is in an unavailable state at the feedback moment, executing, by the terminal, the first behavior related to the first HARQ-ACK.

5. The method according to claim 2, wherein when the target PUCCH cell is the initial PUCCH cell, the performing, by the terminal, a first processing operation on the first HARQ-ACK based on the first operation comprises:
sending the first HARQ-ACK on the initial PUCCH cell.

6. The method according to claim 1, wherein the target PUCCH resource meets one of the following:
when a first SPS configuration indicates a target PUCCH resource identifier, the target PUCCH resource is a PUCCH resource corresponding to the target PUCCH resource identifier;
when the first SPS configuration indicates a PUCCH cell resource list, and a target PUCCH resource allocation record corresponding to the target PUCCH cell exists in the PUCCH cell resource list, the target PUCCH resource is determined based on the target PUCCH resource allocation record; or
the target PUCCH resource is one PUCCH resource in a target PUCCH resource list, and the target PUCCH resource list corresponds to the target PUCCH cell, wherein
the first SPS configuration corresponds to the first HARQ-ACK.

7. The method according to claim 6, wherein the target PUCCH resource identifier corresponds to P PUCCH cells, and P is a positive integer; and
when the P PUCCH cells comprise the target PUCCH cell, the target PUCCH resource is the PUCCH resource corresponding to the target PUCCH resource identifier.

8. The method according to claim 1, wherein the performing, by the terminal, a first processing operation on the first HARQ-ACK based on the first operation comprises:
when a first condition is met, executing, by the terminal, the first behavior related to the first HARQ-ACK, wherein the first condition comprises at least one of the following:
a first SPS configuration indicates a PUCCH cell resource list, and a target PUCCH resource allocation record corresponding to the target PUCCH cell does not exist in the PUCCH cell resource list; and
the first SPS configuration indicates a target PUCCH resource identifier, and a PUCCH cell corresponding to the target resource identifier does not comprise the target PUCCH cell, wherein
the first SPS configuration corresponds to the first HARQ-ACK.

9. The method according to claim 1, wherein the first behavior comprises one of the following:
discarding the first HARQ-ACK;
deferring a time of sending the first HARQ-ACK; and
discarding current transmission of the first HARQ-ACK.

10. A feedback method, comprising:
when a first physical uplink control channel PUCCH cell group corresponding to a terminal comprises at least two PUCCH cells that can be used to transmit hybrid automatic repeat request acknowledgement HARQ-ACK, and the PUCCH cells corresponding to the terminal perform semi-static switching based on a time domain pattern, performing, by a network side device, a first operation on first HARQ-ACK, wherein the first HARQ-ACK is HARQ-ACK for semi-persistent scheduling SPS; and
performing, by the network side device, a second processing operation on the first HARQ-ACK based on the first operation, wherein the first processing operation comprises one of the following: receiving the first HARQ-ACK; or executing second behavior related to the first HARQ-ACK, wherein
the first operation comprises at least one of the following:
determining a target PUCCH cell corresponding to the first HARQ-ACK; or
determining a target PUCCH resource corresponding to the target PUCCH cell.

11. The method according to claim 10, wherein the target PUCCH cell meets either of the following:
the target PUCCH cell is determined based on the time domain pattern; and
the target PUCCH cell is an initial PUCCH cell corresponding to the first HARQ-ACK.

12. The method according to claim 11, wherein when the target PUCCH cell is determined based on the time domain pattern, and the target PUCCH cell is different from the initial PUCCH cell corresponding to the first HARQ-ACK, a target time domain feedback offset corresponding to the first HARQ-ACK meets one of the following:
the target time domain feedback offset is determined based on a first time domain feedback offset index indicated by first DCI and a first time domain feedback offset set, wherein the first time domain feedback offset set is a time domain feedback offset set corresponding to second HARQ-ACK, and the second HARQ-ACK is HARQ-ACK corresponding to physical downlink shared channel PDSCH transmission scheduled based on the first DCI;
the target time domain feedback offset is determined based on the first time domain feedback offset index indicated by the first DCI and a second time domain feedback offset set, and the second time domain feedback offset set is a time domain feedback offset set corresponding to the target PUCCH cell; or
the target time domain feedback offset is determined based on higher layer signaling, and the higher layer signaling carries a time domain feedback offset or a time domain feedback offset index, wherein
the first DCI is used to activate or reactivate SPS PDSCH transmission corresponding to the first HARQ-ACK.

13. The method according to claim 11, wherein when the target PUCCH cell is the initial PUCCH cell, the performing, by the network side device, a second processing operation on the first HARQ-ACK based on the first operation comprises:
determining, by the network side device, an available state of the initial PUCCH cell at a feedback moment of the first HARQ-ACK based on the time domain pattern; and
when the initial PUCCH cell is in an unavailable state at the feedback moment, executing, by the network side device, the second behavior related to the first HARQ-ACK.

14. The method according to claim 11, wherein when the target PUCCH cell is the initial PUCCH cell, the performing, by the network side device, a second processing operation on the first HARQ-ACK based on the first operation comprises:
receiving the first HARQ-ACK on the initial PUCCH cell.

15. The method according to claim 10, wherein the target PUCCH resource meets one of the following:
when a first SPS configuration indicates a target PUCCH resource identifier, the target PUCCH resource is a PUCCH resource corresponding to the target PUCCH resource identifier;
when the first SPS configuration indicates a PUCCH cell resource list, and a target PUCCH resource allocation record corresponding to the target PUCCH cell exists in the PUCCH cell resource list, the target PUCCH resource is determined based on the target PUCCH resource allocation record; or
the target PUCCH resource is one PUCCH resource in a target PUCCH resource list, and the target PUCCH resource list corresponds to the target PUCCH cell, wherein
the first SPS configuration corresponds to the first HARQ-ACK.

16. The method according to claim 15, wherein the target PUCCH resource identifier corresponds to P PUCCH cells, and P is a positive integer; and
when the P PUCCH cells comprise the target PUCCH cell, the target PUCCH resource is the PUCCH resource corresponding to the target PUCCH resource identifier.

17. The method according to claim 1, wherein the performing, by the network side device, a second processing operation on the first HARQ-ACK based on the first operation comprises:
when a first condition is met, executing, by the network side device, the second behavior related to the first HARQ-ACK, wherein the first condition comprises at least one of the following:
a first SPS configuration indicates a PUCCH cell resource list, and a target PUCCH resource allocation record corresponding to the target PUCCH cell does not exist in the PUCCH cell resource list; and
the first SPS configuration indicates a target PUCCH resource identifier, and a PUCCH cell corresponding to the target resource identifier does not comprise the target PUCCH cell, wherein
the first SPS configuration corresponds to the first HARQ-ACK.

18. The method according to claim 10, wherein the second behavior comprises any one of the following:
discarding receiving of the first HARQ-ACK;
deferring a time of receiving the first HARQ-ACK; and
discarding current receiving of the first HARQ-ACK.

19. A feedback apparatus, comprising:
a first execution module, configured to: when a first physical uplink control channel PUCCH cell group corresponding to a terminal comprises at least two PUCCH cells that can be used to transmit hybrid automatic repeat request acknowledgement HARQ-ACK, and the PUCCH cells corresponding to the terminal perform semi-static switching based on a time domain pattern, perform a first operation on first HARQ-ACK, wherein the first HARQ-ACK is HARQ-ACK for semi-persistent scheduling SPS; and
a sending module, configured to perform a first processing operation on the first HARQ-ACK based on the first operation, wherein the first processing operation comprises one of the following: sending the first HARQ-ACK; or executing first behavior related to the first HARQ-ACK; and
the first operation comprises at least one of the following:
determining a target PUCCH cell corresponding to the first HARQ-ACK; or
determining a target PUCCH resource corresponding to the target PUCCH cell.

20. A feedback apparatus, wherein the feedback apparatus comprises:
a second execution module, configured to: when a first physical uplink control channel PUCCH cell group corresponding to a terminal comprises at least two PUCCH cells that can be used to transmit hybrid automatic repeat request acknowledgement HARQ-ACK, and the PUCCH cells corresponding to the terminal perform semi-static switching based on a time domain pattern, perform a first operation on first HARQ-ACK, wherein the first HARQ-ACK is HARQ-ACK for semi-persistent scheduling SPS; and
a receiving module, configured to perform a second processing operation on the first HARQ-ACK based on the first operation, wherein the first processing operation comprises one of the following: receiving the first HARQ-ACK; or executing second behavior related to the first HARQ-ACK, wherein
the first operation comprises at least one of the following: determining a target PUCCH cell corresponding to the first HARQ-ACK; or
determining a target PUCCH resource corresponding to the target PUCCH cell.

21. A terminal, comprising a processor, a memory, and a program or instructions stored in the memory and capable of running on the processor, wherein when the program or the instructions are executed by the processor, the steps of the feedback method according to any one of claims 1 to 9 are implemented.

22. A network side device, comprising a processor, a memory, and a program or instructions stored in the memory and capable of running on the processor, wherein when the program or the instructions are executed by the processor, the steps of the feedback method according to any one of claims 10 to 18 are implemented.

23. A readable storage medium, wherein a program or instructions are stored in the readable storage medium, and when the program or the instructions are executed by a processor, the steps of the feedback method according to any one of claims 1 to 9 are implemented, or when the program or the instructions are executed by a processor, the steps of the feedback method according to any one of claims 10 to 18 are implemented.
